# EUROPÄISCHE PATENTSCHRIFT

(11) **EP 2 861 404 B1**
(45) Veröffentlichungstag und Bekanntmachung des Hinweises auf die Patenterteilung: **10.08.2016**
(21) Anmeldenummer: 13730807.8
(22) Anmeldetag: 15.06.2013
(51) Int. Cl.: B29C 49/42, B65G 11/16, B65G 37/00

(54) **VORRICHTUNG ZUM TRANSPORT VON VORFORMLINGEN**
APPARATUS FOR CONVEYING PREFORMS
DISPOSITIF DE TRANSPORT DE PRÉFORMES

(30) Priorität: 15.06.2012 DE 102012011763
(43) Veröffentlichungstag der Anmeldung: 22.04.2015
(73) Patentinhaber: KHS Corpoplast GmbH, 22145 Hamburg (DE)
(72) Erfinder: HELLER, Alexander, 22941 Bargteheide (DE); HOLLER, Dieter, 23843 Rümpel (DE)
(74) Vertreter: Hausfeld, Norbert
(86) Internationale Anmeldenummer: PCT/EP2013/001776
(87) Internationale Veröffentlichungsnummer: WO 2013/185931

(56) Entgegenhaltungen:
- EP-A1- 1 697 238
- EP-A1- 2 065 320
- EP-A1- 2 221 261
- CH-B1- 698 447
- DE-U1- 20 308 513

## Beschreibung

Die vorliegende Erfindung betrifft eine Vorrichtung zum Transport von Vorformlingen zu einer Maschine zur Herstellung von Behältern aus einem thermoplastischen Material, wobei die Behälterformung durch Blasdruckeinwirkung erzielt wird.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Für die Bereitstellung der Vorformlinge für die Blasmaschine gibt es zwei Alternativen. Bei dem sogenannten Einstufenverfahren werden die Vorformlinge in einem Spritzgussverfahren hergestellt und unmittelbar nach ihrer spritzgusstechnischen Herstellung und einer ausreichenden Verfestigung über eine Transportvorrichtung direkt zur Blasmaschine transportiert. Bei dem sogenannten Zweistufenverfahren werden die Vorformlinge zunächst in einem Spritzgussverfahren gefertigt, anschließend zwischengelagert und erst zu einem späteren Zeitpunkt hinsichtlich ihrer Temperatur konditioniert und zu einem Behälter geblasen. Die Herstellung der Vorformlinge und das Aufblasen der Vorformlinge zu Behältern können zu verschiedenen Zeiten an verschiedenen Orten stattfinden.

Beide Verfahren haben gemein, dass die Vorformlinge über eine Transportvorrichtung der Blasmaschine zugeführt werden. Bekannte Vorrichtungen bestehen z.B. aus einem Steigförderer, über den die in einem Sammelbehälter gelagerten Vorformlinge zu einer Fördereinrichtung transportiert werden. Über die Fördereinrichtung, in der Regel ein Förderband, werden die Vorformlinge zu einer Sortiereinrichtung transportiert. Diese Sortiereinrichtung hat die Aufgabe, die Vorformlinge in eine definierte Position auszurichten, um eine geeignete Übergabe z.B. an eine nachgeschaltete Blasmaschine zu ermöglichen. Bekannte Sortiereinrichtungen (sogenannte Rollensortierer) bestehen z.B. aus zwei Förderrollen, die sich in entgegengesetzter Richtung drehen und zwischen denen ein schmaler Spalt verbleibt, der so gewählt ist, dass die Vorformlinge an ihrem Kragen hängend zwischen den drehenden Förderrollen gehalten werden können. Dabei sind die Förderrollen mit einer Neigung angeordnet, so dass die Vorformlinge in Neigungs- bzw. Förderrichtung an den Förderrollen entlang gleiten. Der Kragen der Vorformlinge bewegt sich in Förderrichtung entlang der von den Förderrollen vorgegebenen Führungsflächen mit teilkreisförmiger Führungsflächenkontur. "Kontur" meint dabei die Form der Führungsfläche in der Schnittebene senkrecht zur Förderrichtung. Je nach Radius des Kragens verläuft der Vorformling auf unterschiedlicher Höhe der Führungsflächen. Die Vorformlinge werden zwischen den rotierenden Rollen hängend sortiert und in Förderrichtung zu einer Ablauffördereinrichtung transportiert, die sich der Sortiereinrichtung anschließt, und die ebenfalls eine Führungsfläche mit Führungsflächenkontur bestimmter Geometrie aufweist, entlang der die sortierten Vorformlinge in die Blasmaschine transportiert werden. Einen solchen Stand der Technik zeigt z.B. die DE 203 08 513 U1, wobei hier zur Überwindung eines erheblichen Höhenunterschiedes zwischen dem Rollensortierer und der Ablaufschiene ein zusätzlicher Höhenförderer angeordnet ist.

Es sind im Wesentlichen zwei Arten von Ablauffördereinrichtungen gebräuchlich. Zum einen wird häufig eine sogenannte Ablaufschiene verwendet, die aus zwei parallel verlaufenden Schienen dergestalt ausgebildet ist, dass dazwischen ein Spalt verbleibt, in dem die Vorformlinge hängend transportiert werden können, wobei die Ablaufschiene so ausgebildet ist, dass sie eine Neigung aufweist, so dass die Vorformlinge aufgrund der Schwerkraftwirkung die Ablaufschiene entlang gleiten. Die Führungsfläche der Ablaufschiene kann in guter Näherung als geneigte Ebene beschrieben werden, die Führungsflächenkontur ist dann eine horizontale Gerade. Weiterhin ist als Ablauffördereinrichtung auch die Verwendung einer Luftförderstrecke bekannt. Auch hier erfolgt ein hängender Transport der Vorformlinge. Luftförderstrecken sind in der Regel horizontal verlaufend angeordnet, und die Förderung der Vorformlinge erfolgt über deren Beaufschlagung mit beschleunigenden Luftströmen. Ein Beispiel für eine solche Luftförderstrecke zeigt die WO2011/138321 A1. Auch hier ist die Führungsfläche, entlang der der Kragen der Vorformlinge geführt ist, im Wesentlichen eine ebene Fläche. Es sind aber auch noch weitere Ablauffördereinrichtungen aus dem Stand der Technik bekannt.

Bei den bekannten Vorrichtungen kommt es häufig zu Störungen im Bereich der Übergabe der Vorformlinge von der Sortiereinrichtung zu der Ablauffördereinrichtung. Die Übergabe der Vorformlinge von der Sortiereinrichtung zur Ablauffördereinrichtung erfolgt über eine Übergabeeinrichtung. Eine solche aus dem Stand der Technik bekannte Übergabeeinrichtung ist z. B. als separates Anschlusselement ausgebildet, das zwischen Sortiereinrichtung und Ablauffördereinrichtung angeordnet und mit beiden verbunden ist. Das Anschlusselement weist dabei eine Führungsflächenkontur auf, die sich ablaufseitig der Führungsflächenkontur der Ablauffördereinrichtung anschließt.

Beim Übergang der Vorformlinge fallen die Vorformlinge von der Sortiereinrichtung auf dieses fest angeordnete Anschlusselement.

Je nach herzustellendem Behältertyp ändert sich die Geometrie der Vorformlinge, so dass die Vorformlinge z.B. einer anderen Bahn auf der Führungsfläche der Rollen des Rollenförderers folgen, z.B. einer höher gelegenen. In der Regel muss daher auch das Anschlusselement der geänderten Situation angepasst werden. Dies hat den Nachteil, dass bei jeder Umstellung des Vorformlingtyps eine Einstellung des Anschlusselements auf den jeweiligen Vorformlingtyp erfolgen muss, die immer zeitaufwendig ist. Das Anschlusselement befindet sich auch in einem schwer zugänglichen Bereich. Weiterhin ist das Anschlusselement bekannter Vorrichtungen so ausgebildet, dass die Vorformlinge mehrere Millimeter nach unten auf das Anschlusselement fallen. Dies führt häufig zu einem Verkippen oder Verklemmen der Vorformlinge auf dem Anschlusselement und damit verbunden zu einer Unterbrechung der Versorgung mit Vorformlingen und in der Konsequenz zu einem Stopp des Blasmaschinenbetriebs.

Die Aufgabe der vorliegenden Erfindung besteht darin, einen Übergabebereich zu schaffen, der einen störungsunanfälligen Vorformlingsfluss bei der Übergabe in die Ablauffördereinrichtung ermöglicht.

Gelöst wird die Aufgabe durch eine Vorrichtung mit den Merkmalen des Anspruchs 1. Weitere vorteilhafte Ausgestaltungen sind in den Unteransprüchen angegeben.

Die erfindungsgemäße Vorrichtung zum Transport von Vorformlingen z.B. zu einer Blasmaschine zur Herstellung von Behältern aus einem thermoplastischen Material weist eine Sortiereinrichtung auf, in der die Vorformlinge in ihrer Ausrichtung sortiert werden, eine auslaufseitig der Sortiereinrichtung angeordnete Ablauffördereinrichtung, über die die Vorformlinge nach der Sortierung der Blasmaschine zugeführt werden, und eine Übergabeeinrichtung, die zwischen der Sortiereinrichtung und der Ablauffördereinrichtung angeordnet ist und mittels der eine Übergabe der Vorformlinge von der Sortiereinrichtung zu der Ablauffördereinrichtung erfolgt. Die Sortiereinrichtung, die Ablauffördereinrichtung und die Übergabeeinrichtung weisen jeweils Führungsflächen mit Führungsflächenkonturen auf, wobei sich erfindungsgemäß diese Führungsflächen im Wesentlichen stufenlos aneinander anschließen. Über diese im Wesentlichen stufenlose Gesamtführungsfläche werden die Vorformlinge durch die Vorrichtung geführt. Erfindungsgemäß ist die Übergabeeinrichtung dazu als separates Übergabeelement ausgebildet, das eine gekrümmte Führungsfläche aufweist, die an ihrem sortiereinrichtungsseitigen Ende der Führungsflächenkontur der Sortiereinrichtung formangepasst ist, und die am ablauffördereinrichtungsseitigen Ende der Führungsflächenkontur der Ablauffördereinrichtung formangepasst ist, wobei sich diese beiden endseitigen Führungsflächenkonturen unterscheiden und die Führungsfläche zwischen diesen beiden Enden stufenlos verläuft, indem die Kontur kontinuierlich vom einen zum anderen Ende übergeht. Formangepasst bedeutet in diesem Zusammenhang, dass dort, wo das Übergabeelement an die benachbarten Führungsflächen angrenzt, ein störungsfreier Übergang gewährleistet ist, weil sich die benachbarten Konturen so weit ähnlich sind, dass keine größeren Stufen verbleiben. Sie können sogar identisch sein, müssen es aber nicht.

Die vorliegende Erfindung bietet den Vorteil, dass durch das Vorsehen des erfindungsgemäßen Übergabeelements die Vorformlinge quasi kontinuierlich entlang einer Führungsfläche geführt sind. Da das Übergabeelement sortiereinrichtungsseitig der Führungsflächenkontur der Sortiereinrichtung folgt ist automatisch gewährleistet, dass unabhängig von der konkreten Bewegungsbahn des Vorformlings eine kontinuierlicher Übergang auf das Übergangselement und somit auf die Ablauffördereinrichtung erfolgt. Eine umständliche Anpassung der Vorrichtung an veränderte Vorformlingtypen muss nicht mehr erfolgen, wodurch vorteilhaft Zeit eingespart werden kann.

Gemäß einer vorteilhaften Ausgestaltung der Erfindung handelt es sich bei der Sortiereinrichtung um einen sogenannten Rollensortierer. Sortiereinrichtungsseitig ist das Übergabeelement dann an die teilkreisförmige Führungsflächenkontur der Führungsfläche der Rollen formangepasst, und weist ebenfalls eine teilkreisförmige Führungsflächenkontur auf mit identischem oder im Wesentlichen identischem Kreisradius.

Eine weitere vorteilhafte Ausgestaltung der Erfindung sieht vor, dass das Übergabeelement aus einem Anschlusselement und einem Nachrüstübergabeelement besteht. Dieses Nachrüstübergabeelement ist sortierseitig im wesentlichen wie die Führungsfläche der Sortiereinrichtung konturiert, und ablaufseitig wie die Führungsfläche des Anschlusselements. Auf diese Weise lassen sich bestehende Vorrichtungen leicht nachrüsten.

Weiterhin wird vorgeschlagen, dass das Übergabeelement ortsfest zu den Förderrollen angeordnet ist. Der Abstand der Förderrollen ist manchmal in Abhängigkeit von der Geometrie des jeweiligen Vorformlingtyps zu verändern. Die erfindungsgemäße Ausgestaltung bietet den Vorteil, dass sich bei einer Verstellung der Rollen das ortsfest dazu oder daran angeordnete Übergabeelement immer mit den Rollen verschiebt und somit die eingestellte Formanpassung der Führungsflächenkonturen zwischen Sortiereinrichtung und Übergabeelement erhalten und eine Neueinstellung des Übergabeelements nicht erforderlich ist.

In Alternative dazu könnte das Übergabeelement der Verschiebung der Rollen nicht folgend ausgebildet sein, sondern feststehend sein. Dann ist es vorteilhaft, wenn die sortierseitige Führungsflächenkontur des Übergabeelements von der exakten Rollenkontur abweicht und so geformt ist, dass bei den Extrempositionen, die die Förderrollen bei üblichen Vorformlingtypen einnehmen, noch immer ein Übergang mit geringer Stufe erfolgt. Diese Führungsflächenkontur könnte z.B. eine aus den bei den jeweiligen Rollenpositionen optimalen Führungsflächenkonturen gemittelte Führungsflächenkontur sein.

Wie bereits in der Einleitung erwähnt, ist es bekannt, dass für den Transport der Vorformlinge in der Regel zwei verschiedene Ablauffördereinrichtungen zum Einsatz kommen. Entsprechend kann es sich gemäß weiterer Ausgestaltungen der Erfindung bei der Ablauffördereinrichtung um eine Ablaufschiene handeln.

Denkbar sind aber auch der Einsatz einer Luftförderstrecke oder andere mögliche Fördereinrichtungen.

Im Folgenden wird die Erfindung anhand mehrerer Figuren näher erläutert. Es zeigen:
- Fig. 1: eine Vorrichtung zum Transport von Vorformlingen zu einer Blasmaschine für die Herstellung von Behältern aus einem thermoplastischen Material,
- Fig. 2: eine isometrische Ansicht des Details X aus Fig. 1, wobei es sich um den Übergabebereich von der Sortiereinrichtung zu der Ablauffördereinrichtung handelt,
- Fig. 3: eine Vorderansicht des Details X aus Fig. 1,
- Fig. 4: eine schematische Darstellung der Anordnung eines erfindungsgemäßen Übergabeelements.

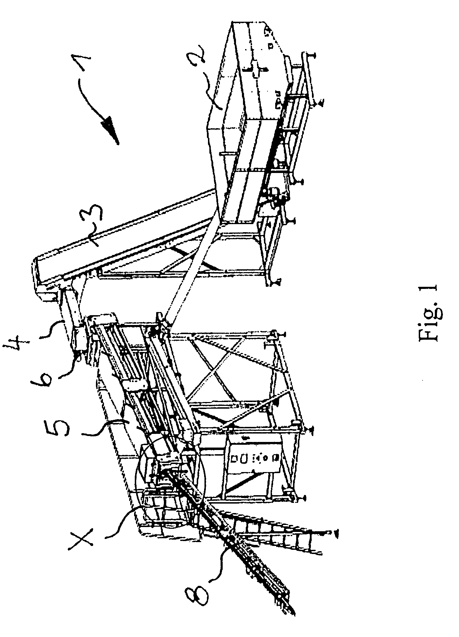

Die Fig. 1 zeigt eine Vorrichtung 1 zum Transport von Vorformlingen z.B. zu einer Blasmaschine für die Herstellung von PET-Flaschen. Die Vorrichtung besteht aus einem Sammelbehälter 2, in dem ein Vorformlingsvorrat bereitgestellt ist. Von dem Sammelbehälter 2 werden die Vorformlinge über einen Steigförderer 3 zu einem Eingabeende einer Fördereinrichtung 4 transportiert. Die Fördereinrichtung 4 ist mit ihrem anderen Ende, dem Abgabeende, oberhalb einer Sortiereinrichtung 5 angeordnet, wobei zur geordneten und möglichst störungsfreien Übergabe der Vorformlinge von der Fördereinrichtung 4 an die Sortiereinrichtung 5 eine dazwischen angeordnete Zuführeinrichtung 6 vorgesehen ist. Von der Sortiereinrichtung 5 gelangen die Vorformlinge sortiert in eine Ablauffördereinrichtung 8, über die die Vorformlinge in die Blasmaschine (nicht dargestellt) gefördert werden.

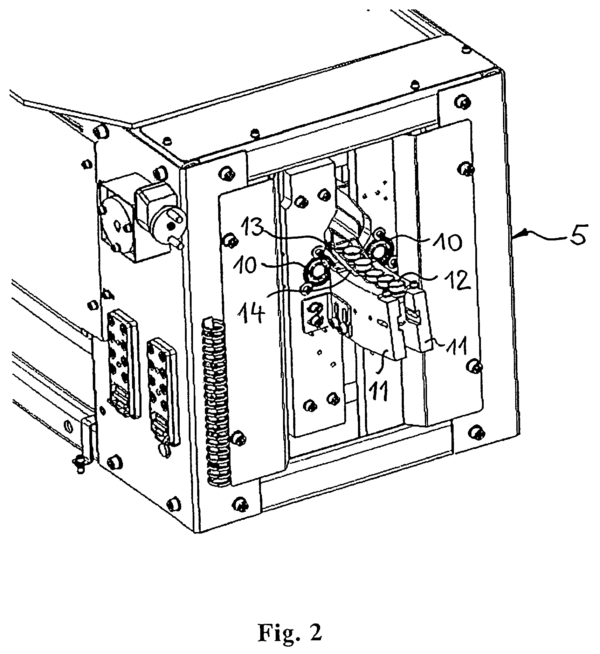

In der Fig. 2 ist eine isometrische Ansicht des Auslaufsbereichs der Sortiereinrichtung 5 dargestellt. Die Sortiereinrichtung 5 weist zwei Förderrollen 10 auf, die parallel zueinander angeordnet und durch einen Spalt voneinander beabstandet sind. In dem Spalt werden die Vorformlinge 12, die in der Regel einen Kragen aufweisen, hängend transportiert. An der Sortiereinrichtung 5 ist ein zweiteiliges Anschlusselement 11 befestigt, das ebenfalls einen Spalt aufweist, in dem die Vorformlinge 12 hängend transportiert werden können. Auf dem Anschlusselement 11 ist das aus zwei Teilen bestehende Übergangselement 13 befestigt, das eine Führungsfläche 14 aufweist, an der die Vorformlinge in Richtung des Anschlusselements 11 entlang gleiten. Ist eine ortsfeste Anbringung relativ zu den Förderrollen gewünscht, kann die Befestigung des Übergangselements 13 an den Haltern 16 erfolgen, an denen auch die Förderrollen 10 gelagert sind.

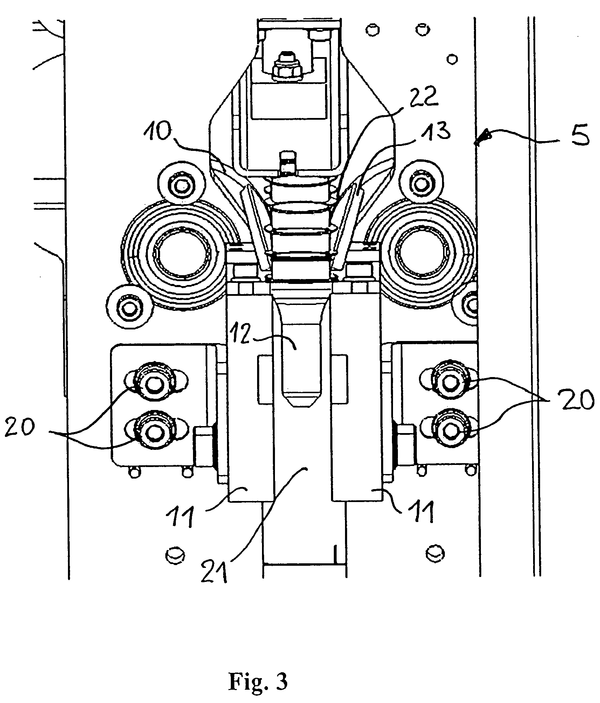

Die Fig. 3 zeigt eine Vorderansicht des in Fig. 1 gekennzeichneten Details X. Zu sehen ist die Sortiereinrichtung 5 und das über Schraubverbindungen 20 an der Sortiereinrichtung 5 befestigte zweiteilige Anschlusselement 11. Zwischen den beiden Teilen des Anschlusselementes 11 befindet sich der Spalt 21, in dem die Vorformlinge 12 hängend transportiert werden. Auf dem Anschlusselement 11 ist das aus zwei Teilen bestehende Übergangselement 13 befestigt, wobei das Übergangselement 13 eine dreidimensional gekrümmte Führungsfläche 22 aufweist.

In der Fig. 3 ist der Transport mehrerer hintereinander angeordneter Vorformlinge 12 von der Sortiereinrichtung kommend in Richtung Ablauffördereinrichtung dargestellt. Aufgrund der an dem Übergangselement 13 vorgesehenen Führungsfläche 22 gleiten die Vorformlinge 12 kontinuierlich ohne nennenswerte Sprünge entlang des Anschlusselementes 11 zu der nicht dargestellten Ablauffördereinrichtung.

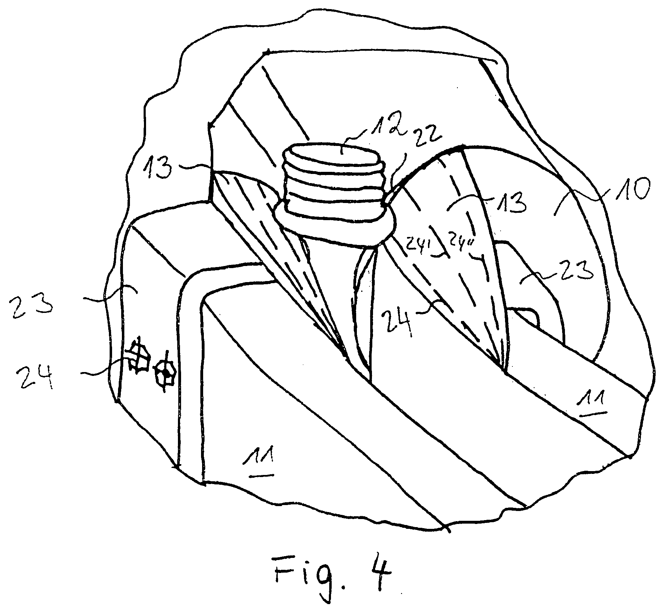

Die Fig. 4 zeigt in einer Detailansicht die Anordnung und Ausbildung eines Ausführungsbeispiels für ein Übergangselement einer erfindungsgemäßen Vorrichtung.

Das Übergabeelement 13 ist auf dem Anschlusselement 11 angeordnet und über Verbindungslaschen 23 mittels Schraubverbindungen 24 an dem Anschlusselement 11 befestigt. Zur Führung der Vorformlinge ist das Übergabeelement 13 an seinem sortiereinrichtungsseitigen Ende so ausgebildet, dass es dem oberen Umfang der Förderrolle 10 formangepasst ist. Dabei ist die Führungsfläche 22 so ausgebildet, dass sie am oberen Umfang der Förderrolle 10 beginnt und sich in einem Bogen bis zum Anschlusselement 11 erstreckt, wobei der Bogen so ausgebildet ist, dass er eine gleitende, störungsfreie Übergabe von der Förderrolle 10 auf das Übergangselement 13 ermöglicht. An seinem unteren Ende ist das Übergangselement 13 spitz zulaufend ausgebildet, wobei die Spitze so gestaltet ist, dass eine gleitende, störungsfreie Übergabe von dem Übergabeelement 13 auf das Anschlusselement 11 realisiert werden kann.

In seinem mittleren Bereich ist die Führungsfläche 22 des Übergabeelements so konturiert, dass der Vorformling 12 über eine zwischen dem oberen und dem unteren Ende verlaufende Führungsbahn 24 in Richtung des Anschlusselements 11 und der Ablauffördereinrichtung gleitet. In Abhängigkeit von der Geometrie ergeben sich aufgrund der Ausbildung der Führungsfläche 22 verschiedene Führungsbahnen 24', 24", denen gemein ist, dass auf ihnen die Vorformlinge 12 von der Sortiereinrichtung störungsfrei zu dem Anschlusselement 11 geführt werden.

## Patentansprüche

1. Vorrichtung (1) zum Transport von Vorformlingen (12) z.B. zu einer Blasmaschine zur Herstellung von Behältern aus einem thermoplastischen Material, mit einer Sortiereinrichtung (5), in der die Vorformlinge (12) in ihrer Ausrichtung sortiert werden, mit einer auslaufseitig der Sortiereinrichtung (5) angeordneten Ablauffördereinrichtung (8), über die die Vorformlinge (12) der Blasmaschine zugeführt werden, und mit einer zwischen der Sortiereinrichtung (5) und der Ablauffördereinrichtung(8) angeordneten Übergabeeinrichtung (11, 13), in der eine Übergabe der Vorformlinge (12) von der Sortiereinrichtung (5) zu der Ablauffördereinrichtung (8) erfolgt, wobei die Sortiereinrichtung (5), die Fördereinrichtung (8) und die Übergabeeinrichtung jeweils Führungsflächen mit Führungsflächenkonturen aufweisen, über die die Vorformlinge (12) durch die Vorrichtung (1) geführt sind, **dadurch gekennzeichnet, dass** sich die Führungsflächenkonturen im wesentlichen stufenlos aneinander anschließen, wobei die Übergabeeinrichtung dazu als Übergabeelement (13) ausgebildet ist, das eine gekrümmte Führungsfläche (22) aufweist, die an ihrem sortiereinrichtungsseitigen Ende der Führungsflächenkontur der Sortiereinrichtung (5) formangepasst ist, und die am ablauffördereinrichtungsseitigen Ende der Führungsflächenkontur der Ablauffördereinrichtung (8) formangepasst ist, wobei sich diese beiden endseitigen Führungsflächenkonturen unterscheiden und die Führungsfläche (22) zwischen diesen beiden Enden stufenlos verläuft.

2. Vorrichtung nach Anspruch 1, **dadurch gekennzeichnet, dass** die Sortiereinrichtung (5) ein Rollensortierer ist.

3. Vorrichtung nach Anspruch 1 o der 2, **dadurch gekennzeichnet, dass** das Übergabeelement aus einem Anschlusselement (11) und einem Nachrüstübergabeelement (13) besteht.

4. Vorrichtung nach einem der vorhergehenden Ansprüche, **dadurch gekennzeichnet, dass** das Übergabeelement (13) zweiteilig ausgebildet ist.

5. Vorrichtung nach einem der vorhergehenden Ansprüche 2 bis 4, **dadurch gekennzeichnet, dass** das Übergabeelement (13) ortsfest zu den Förderrollen (10) angeordnet ist.

6. Vorrichtung nach einem der vorhergehenden Ansprüche 3 bis 5, **dadurch gekennzeichnet, dass** das Anschlusselement (11) eine Führungsfläche aufweist, die ablauffördereinrichtungsseitig formangepasst zur Führungsfläche der Ablauffördereinrichtung (8) konturiert ist.

7. Vorrichtung nach einem der vorhergehenden Ansprüche 3 bis 6, **dadurch gekennzeichnet, dass** die Führungsfläche (22) des Übergabeelements (13) an ihrem anschlusselementseitigen Ende formangepasst zur Führungsflächenkontur des Anschlusselements konturiert ist.

8. Vorrichtung nach einem der vorhergehenden Ansprüche, **dadurch gekennzeichnet, dass** das Übergabeelement eine Führungsfläche (22) aufweist, die so ausgebildet ist, dass Vorformlinge mit unterschiedlichen Geometrien auf unterschiedlichen kontinuierlichen und stufenlosen Führungsbahnen (24, 24', 24") von der Sortiereinrichtung (5) zur Ablauffördereinrichtung (8) geführt sind.

9. Vorrichtung nach einem der vorhergehenden Ansprüche, **dadurch gekennzeichnet, dass**, die Ablauffördereinrichtung (8) eine Ablaufschiene ist.

10. Vorrichtung nach einem der vorhergehenden Ansprüche, **dadurch gekennzeichnet, dass**, die Ablauffördereinrichtung (8) eine Luftförderstrecke ist.

## Claims

1. Apparatus (1) for conveying preforms (12), for example to a blow moulding machine for producing containers from a thermoplastic material, comprising a sorting device (5), in which the preforms (12) are sorted according to their orientation, comprising an exit conveyor device (8), which is disposed at the discharge end of the sorting device (5) and via which the preforms (12) are fed to the blow moulding machine, and comprising a transfer device (11, 13), which is disposed between the sorting device (5) and the exit conveyor device (8), and in which the preforms (12) are transferred from the sorting device (5) to the exit conveyor device (8), wherein the sorting device (5), the conveyor device (8) and the transfer device all have guide surfaces comprising guide surface contours, via which the preforms (12) are guided through the apparatus (1),
**characterised in that**
the guide surface contours adjoin one another in an essentially stepless manner, wherein the transfer device is designed as a transfer element (13), which has a curved guide surface (22), which is adjusted to the shape of the guide surface contour of the sorting device (5) at the end facing the sorting device and which is adjusted to the shape of the guide surface contour of the exit conveyor device (8) at the end facing the exit conveyor device, wherein said two guide surface contours facing the ends of the two devices are different, and the guide surface (22) runs in a stepless manner between said two ends.

2. Apparatus according to claim 1, **characterised in that** the sorting device (5) is a roller sorter.

3. Apparatus according to claim 1 or 2, **characterised in that** the transfer element consists of a connecting element (11) and a retrofitting transfer element (13).

4. Apparatus according to any one of the preceding claims, **characterised in that** the transfer element (13) is embodied in two pieces.

5. Apparatus according to any one of the preceding claims 2 to 4, **characterised in that** the transfer element (13) is disposed so as to be stationary relative to the conveyor rollers (10).

6. Apparatus according to any one of the preceding claims 3 to 5, **characterised in that** the connecting element (11) has a guide surface, which is contoured so as to be adjusted to the shape of the guide surface of the exit conveyor device (8) at the end facing the exit conveyor device.

7. Apparatus according to any one of the preceding claims 3 to 6, **characterised in that** the guide surface (22) of the transfer element (13) is contoured so as to be adjusted to the shape of the guide surface contour of the connecting element at its end facing the connecting element.

8. Apparatus according to any one of the preceding claims, **characterised in that** the transfer element has a guide surface (22), which is embodied such that preforms comprising different geometries are guided on different continuous and stepless guide tracks (24, 24', 24") from the sorting device (5) to the exit conveyor device (8).

9. Apparatus according to any one of the preceding claims, **characterised in that** the exit conveyor device (8) is a running rail.

10. Apparatus according to any one of the preceding claims, **characterised in that** the exit conveyor device (8) is an air conveying section.

## Revendications

1. Dispositif (1) de transport de préformes (12), par ex. vers une machine de moulage par soufflage destinée à fabriquer des récipients en un matériau thermoplastique, avec un dispositif d'arrangement (5) dans lequel les préformes (12) sont alignées, un dispositif de transport (8) placé du côté de la sortie du dispositif d'arrangement (5) et assurant l'alimentation de la machine de moulage par soufflage en préformes (12), et un dispositif de transfert (11, 13) placé entre le dispositif d'arrangement (5) et le dispositif de transport (8) et dans lequel a lieu une remise des préformes (12) du dispositif d'arrangement (5) au dispositif de transport (8), le dispositif d'arrangement (5), le dispositif de transport (8) et le dispositif de transfert présentant respectivement des surfaces de guidage avec des profils de guidage assurant le guidage des préformes (12) lors de leur passage dans le dispositif (1), **caractérisé en ce que** les jonctions entre les profils des surfaces de guidage sont sensiblement continues, le dispositif de transfert étant, à cette fin, réalisé sous forme d'élément de transfert (13) présentant une surface de guidage (22) incurvée dont l'extrémité située du côté du dispositif d'arrangement (5) a une forme adaptée au profil de la surface de guidage du dispositif d'arrangement (5), et dont l'extrémité située du côté du dispositif de transport (8) a une forme adaptée au profil de la surface de guidage du dispositif de transport (8), ces deux profils de guidage aux extrémités étant différents l'un de l'autre et le cours de la surface de guidage (22) entre ces deux extrémités ne présentant pas de discontinuité.

2. Dispositif selon la revendication 1, **caractérisé en ce que** le dispositif d'arrangement (5) est un ein trieur à galets.

3. Dispositif selon la revendication 1 ou 2, **caractérisé en ce que** l'élément de transfert est constitué d'un élément de raccordement (11) et d'un élément de transfert complémentaire (13).

4. Dispositif selon l'une des revendications précédentes, **caractérisé en ce que** l'élément de transfert (13) est composé de deux parties.

5. Dispositif selon l'une des revendications précédentes 2 à 4, **caractérisé en ce que** l'agencement de l'élément de transfert (13) est stationnaire par rapport aux galets de transport (10).

6. Dispositif selon l'une des revendications précédentes 3 à 5, **caractérisé en ce que** l'élément de raccordement (11) présente une surface de guidage dont le profil côté dispositif de transport (8) a une forme adaptée à la surface de guidage de ce dispositif de transport.

7. Dispositif selon l'une des revendications précédentes 3 à 6, **caractérisé en ce que** l'extrémité côté élément de raccordement de la surface de guidage (22) de l'élément de transfert (13) présente une forme adaptée au profil de la surface de guidage de l'élément de raccordement.

8. Dispositif selon l'une des revendications précédentes, **caractérisé en ce que** l'élément de transfert présente une surface de guidage (22) de forme telle que des préformes de géométries différentes sont guidées du dispositif d'arrangement (5) au dispositif de transport (8) selon des trajectoires continues (24, 24', 24") différentes.

9. Dispositif selon l'une des revendications précédentes, **caractérisé en ce que** le dispositif de transport (8) est une glissière de transport.

10. Dispositif selon l'une des revendications précédentes, **caractérisé en ce que** le dispositif de transport (8) est un transporteur pneumatique.
